# EUROPEAN PATENT SPECIFICATION

(11) **EP 2 956 571 B1**
(45) Date of publication and mention of the grant of the patent: **22.05.2019**
(21) Application number: 14722964.5
(22) Date of filing: 15.04.2014
(51) Int. Cl.: C23F 11/06, C02F 5/10, C11D 11/00, C23F 11/173, C23G 1/18, C11D 3/00

(54) **HIGH MOLECULAR WEIGHT POLYACRYLIC ACIDS AS CORROSION INHIBITORS IN AN ALKALINE HYPOCHLORITE AQUEOUS COMPOSITION AND METHOD THEREOF**
POLYACRYLSÄUREN MIT HOHEM MOLEKULARGEWICHT ALS KORROSIONSHEMMER IN EINER WÄSSRIGEN ALKALI-HYPOCHLORIT-ZUSAMMENSETZUNG UND VERFAHREN DAFÜR
ACIDES POLYACRYLIQUES DE MASSE MOLÉCULAIRE ÉLEVÉE COMME INHIBITEURS DE CORROSION DANS UNE COMPOSITION AQUEUSE D'HYPOCHLORITE ALCALIN ET PROCÉDÉ CORRESPONDANT

(30) Priority: 17.04.2013 US 201361812855 P
(43) Date of publication of application: 23.12.2015
(73) Proprietor: Rohm and Haas Company, Philadelphia, PA 19106 (US)
(72) Inventor: SHULMAN, Jan E., Newtown, PA 18940 (US)
(74) Representative: Houghton, Mark Phillip
(86) International application number: PCT/US2014/034094
(87) International publication number: WO 2014/172318

(56) References cited:
- EP-A1- 0 606 707
- WO-A1-96/29451
- WO-A1-98/51769
- WO-A2-2012/085830
- US-A- 5 413 727
- US-A- 6 083 422
- US-A1- 2002 115 579

## Description

### Background

This invention generally relates to highly alkaline and oxidizing compositions containing polyacrylic acids as corrosion inhibitors.

US 2002115579 A1 discloses an alkaline drain cleaner.

Low-molecular-weight dispersant polymers have been used as corrosion inhibitors. For example, each of WO 2012085830, WO 9629451,

U.S. Patent 5,976,414 discloses polyacrylic acids having molecular weight in the range from 500 to 15,000 as part of a corrosion-inhibiting package in mildly alkaline aqueous compositions. However, there is a need for corrosion inhibition in more highly alkaline and oxidizing systems.

The problem solved by the present invention is to provide improved corrosion resistance in highly alkaline and oxidizing compositions.

### Statement of the Invention

The present invention is directed to a liquid drain cleaner comprising an aqueous composition having a pH of at least 11 and comprising: (a) 2-15 wt% of a metal hypochlorite salt, and (b) 0.2 to 4 wt% of a polyacrylic acid having a weight average molecular weight (M_{w}) of at least 40,000, wherein said polyacrylic acid comprises no more than 0.3 wt% polymerized residues of crosslinkers.

The present invention is further directed to a method for inhibiting corrosion in an aqueous composition having a pH of at least 11 and from 2-15 wt% of a metal hypochlorite salt by adding 0.2 to 4 wt% of a polyacrylic acid having a number average molecular weight of at least 40,000, wherein said polyacrylic acid comprises no more than 0.3 wt% polymerized residues of crosslinkers, in which the aqueous composition is a liquid drain cleaner.

### Detailed Description of the Invention

All percentages are weight percentages (wt%), all fractions are by weight and all temperatures are in °C, unless otherwise indicated. Percentages of polymerized monomer residues in polymers are based on the entire weight of the solid polymer and percentages of monomers are based on total monomer weight. Measurements made at "room temperature" (room temp.) were made at 20-25 °C. Weight average molecular weights, M_{w}, and number average molecular weights, Mₙ, are measured by gel permeation chromatography (GPC) using polyacrylic acid standards, as is known in the art. The techniques of GPC are discussed in detail in Modern Size Exclusion Chromatography, W. W. Yau, J. J. Kirkland, D. D. Bly; Wiley-Interscience, 1979, and in A Guide to Materials Characterization and Chemical Analysis, J. P. Sibilia; VCH, 1988, p. 81-84. The molecular weights reported herein are in units of daltons.

Crosslinkers are monomers having two or more non-conjugated ethylenically unsaturated groups. Examples of crosslinkers include, e.g., di- or tri-allyl ethers and di- or tri-(meth)acrylyl esters of diols or polyols (e.g., trimethylolpropane diallyl ether (TMPDAE) and trimethylolpropane trimethacrylate (TMPTMA)), di- or tri-allyl esters of di- or tri-acids, allyl (meth)acrylate, divinyl sulfone, triallyl phosphate, divinylaromatics (e.g., divinylbenzene).

Preferably, the M_{w} of the polyacrylic acid is at least 50,000, preferably at least 60,000, preferably at least 80,000, preferably at least 100,000, preferably at least 150,000, preferably at least 200,000, preferably at least 250,000, preferably at least 300,000, preferably at least 350,000. Preferably, the M_{w} of the polyacrylic acid is no greater than 1,000,000, preferably no greater than 800,000, preferably no greater than 700,000, preferably no greater than 600,000, preferably no greater than 500,000. The term "polyacrylic acid" as used herein refers to polyacrylic acid and salts thereof, e.g., the polyacrylic acid sodium salt which would be present in a high-pH aqueous formulation containing sodium hydroxide. Molecular weights of polyacrylic acids are as measured for the acid form, and weight percentages are on the basis of the acid form.

Preferably, the amount of polyacrylic acid(s) in the composition is at least 0.3 wt%, preferably at least 0.4 wt%, preferably at least 0.5 wt%, preferably at least 0.6 wt%, preferably at least 0.7 wt%, preferably at least 0.8 wt%. Preferably, the amount of polyacrylic acid(s) in the composition is no greater than 3 wt%, preferably no greater than 2.5 wt%, preferably no greater than 2 wt%, preferably no greater than 1.7 wt%, preferably no greater than 1.4 wt%.

Preferably, the metal hypochlorite salt is an alkali metal or alkaline earth metal salt or a combination thereof; preferably a sodium, potassium, magnesium or calcium salt; preferably sodium hypochlorite. Preferably, the amount of metal hypochlorite salt(s) is at least 3 wt%, preferably at least 4 wt%, preferably at least 5 wt%; preferably no more than 13 wt%, preferably no more than 12 wt%, preferably no more than 11 wt%, preferably no more than 10 wt%. In a preferred embodiment, the composition further comprises up to 3 wt% hydrogen peroxide or salts thereof, preferably from 0.1 to 2.5 wt%, preferably from 0.5 to 2 wt%.

Preferably, the pH of the aqueous composition is at least 11.5, preferably at least 12, preferably at least 12.3, preferably at least 12.6. Preferably, the pH of the aqueous composition is no greater than 14, preferably no greater than 13.5. Preferably, the aqueous composition contains from 0.2 to 5 wt% of one or more alkali metal hydroxides, preferably sodium or potassium hydroxide, preferably sodium hydroxide. Preferably, the amount of alkali metal hydroxide is at least 0.3 wt%, preferably at least 0.4 wt%, preferably at least 0.5 wt%, preferably at least 0.6 wt%; preferably no more than 3 wt%, preferably no more than 2.5 wt%, preferably no more than 2 wt%.

Preferably, the aqueous composition comprises at least 75 wt% water, preferably at least 78 wt%, preferably at least 80 wt%, preferably at least 82 wt%, preferably at least 83 wt%, preferably at least 84 wt%, preferably at least 85 wt%, preferably at least 86 wt%. Preferably, the aqueous composition comprises no more than 95 wt% water, preferably no more than 93 wt%, preferably no more than 91 wt%, and preferably no more than 90 wt%. Preferably, the aqueous composition contains less than 10 wt% of ingredients other than water, polyacrylic acid, metal hypochlorite and alkali metal hydroxide; preferably less than 7 wt%, preferably less than 5 wt%, preferably less than 4 wt%, preferably less than 3 wt%.

The polyacrylic acid comprises no more than 0.3 wt% polymerized residues of crosslinkers, preferably no more than 0.2 wt%, preferably no more than 0.1 wt%, preferably no more than 0.05 wt%, preferably no more than 0.03 wt%, preferably no more than 0.02 wt%, preferably no more than 0.01 wt%, preferably no more than 0.005 wt%, preferably no more than 0.001 wt%. Preferably, the polyacrylic acid comprises no more than 5 wt% polymerized residues of monomers other than acrylic acid, preferably no more than 3 wt%, preferably no more than 2 wt%, preferably no more than 1 wt%, preferably no more than 0.5 wt%, preferably no more than 0.2 wt%. The end group of the polyacrylic acid chain is not critical.

The aqueous composition of this invention is a liquid drain cleaner. Other components which may be present in liquid drain cleaners include surfactants, thickeners, silicate salts and phosphate salts. Preferably, amine oxide surfactants are present, preferably in amounts from 1 to 3 wt%. Liquid drain cleaners not containing the high-molecular-weight polyacrylic acids described herein may cause excessive corrosion of metal pipes, especially those made of galvanized steel.

### Examples

A commercial sample of LIQUID PLUMR drain cleaner was purchased and used for the testing described herein. LIQUID PLUMR drain cleaner has a pH of 13. Coupons of galvanized steel measuring 7.62 cm x 1.27 cm x 0.17 cm were used for testing. Various polyacrylic acids were added to the drain cleaner at a level of 1 wt% (as solids) and the coupons were immersed in the drain cleaners for 6 days at room temperature under static conditions. Corrosion was determined by laboratory immersion corrosion testing. Commercially available metal specimens were prepared and immersed in the test solutions for a predetermined period of time and temperature. At the conclusion of testing, the specimens were cleaned, weighed, and visually examined using a stereo-zoom microscope. Uniform corrosion rates were calculated and reported as a penetration rate in mpy (mpy - milli-inch per year). It is also common to report corrosion rates in the SI units of mm/y (mm/y - millimeters per year) where 1 mpy is equivalent to 0.0254 mm/y. Testing was performed in accordance with ASTM G1-03, "Standard Practice for Preparing, Cleaning, and Evaluating Corrosion Test Specimens" and ASTM G31-72 "Standard Practice for Laboratory Immersion Corrosion Testing of Metals". The following table describes the tested drain cleaner samples and the results.

| polyacrylic acid | M_{w} | corrosion rate, mpy | corrosion rate, mm/y |
|---|---|---|---|
| [none] - untreated drain cleaner | N/A | 16 | 0.41 |
| A | 3,600 | 16 | 0.41 |
| B | 4,500 | 16 | 0.41 |
| C | 1,900 | 16 | 0.46 |
| D | 400,000 | 4 | 0.10 |

Polyacrylic acid A has a phosphino end group, B and D have a sulfonate end group and C has a phosphono end group.

The testing described above was also performed using carbon steel coupons. No difference in corrosion rate was observed among the samples.

## Claims

1. A liquid drain cleaner comprising an aqueous composition having a pH of at least 11 and comprising: (a) 2-15 wt% of a metal hypochlorite salt, and (b) 0.2 to 4 wt% of a polyacrylic acid having a weight average molecular weight of at least 40,000, wherein said polyacrylic acid comprises no more than 0.3 wt% polymerized residues of crosslinkers.

2. The liquid drain cleaner of claim 1 in which the aqueous composition has a pH of at least 12.

3. The liquid drain cleaner of claim 2 in which the polyacrylic acid has a weight average molecular weight of at least 100,000.

4. The liquid drain cleaner of claim 3 comprising from 0.5 to 2 wt% of the polyacrylic acid.

5. The liquid drain cleaner of claim 4 in which the metal hypochlorite salt is sodium hypochlorite.

6. The liquid drain cleaner of claim 5 comprising from 4 to 11 wt% sodium hypochlorite.

7. A method for inhibiting corrosion in an aqueous composition having a pH of at least 11 and from 2-15 wt% of a metal hypochlorite salt by adding 0.2 to 4 wt% of a polyacrylic acid having a number average molecular weight of at least 40,000, wherein said polyacrylic acid comprises no more than 0.3 wt% polymerized residues of crosslinkers, in which the aqueous composition is a liquid drain cleaner.

8. The method of claim 7 in which the drain cleaner has a pH of at least 12.

9. The method of claim 8 in which the polyacrylic acid has a weight average molecular weight of at least 100,000, the aqueous composition comprises from 0.5 to 2 wt% of the polyacrylic acid and the aqueous composition comprises from 4 to 11 wt% sodium hypochlorite.

## Patentansprüche

1. Ein flüssiger Abflussreiniger, der eine flüssige Zusammensetzung mit einem pH-Wert von mindestens 11 beinhaltet und Folgendes beinhaltet: (a) 2-15 Gew.-% eines Metallhypochloritsalzes, und (b) 0,2 bis 4 Gew.-% einer Polyacrylsäure mit einem Gewichtsmittel der Molmasse von mindestens 40 000, wobei die Polyacrylsäure nicht mehr als 0,3 Gew.-% polymerisierte Reste von Vernetzern beinhaltet.

2. Flüssiger Abflussreiniger gemäß Anspruch 1, wobei die wässrige Zusammensetzung einen pH-Wert von mindestens 12 aufweist.

3. Flüssiger Abflussreiniger gemäß Anspruch 2, wobei die Polyacrylsäure ein Gewichtsmittel der Molmasse von mindestens 100 000 aufweist.

4. Flüssiger Abflussreiniger gemäß Anspruch 3, der 0,5 bis 2 Gew.-% der Polyacrylsäure beinhaltet.

5. Flüssiger Abflussreiniger gemäß Anspruch 4, wobei das Metallhypochloritsalz ein Natriumhypochlorit ist.

6. Flüssiger Abflussreiniger gemäß Anspruch 5, der 4 bis 11 Gew.-% Natriumhypochlorit beinhaltet.

7. Ein Verfahren zum Verhindern von Korrosion in einer wässrigen Zusammensetzung mit einem pH-Wert von mindestens 11 und 2-15 Gew.-% eines Metallhypochloritsalzes, durch das Hinzufügen von 0,2 bis 4 Gew.-% einer Polyacrylsäure mit einem Gewichtsmittel der Molmasse von mindestens 40 000, wobei die Polyacrylsäure nicht mehr als 0,3 Gew.-% polymerisierte Reste von Vernetzern beinhaltet, wobei die wässrige Zusammensetzung ein flüssiger Abflussreiniger ist.

8. Verfahren gemäß Anspruch 7, wobei der Abflussreiniger einen pH-Wert von mindestens 12 aufweist.

9. Verfahren gemäß Anspruch 8, wobei die Polyacrylsäure ein Gewichtsmittel der Molmasse von mindestens 100 000 aufweist, wobei die wässrige Zusammensetzung 0,5 bis 2 Gew.-% der Polyacrylsäure beinhaltet und die wässrige Zusammensetzung 4 bis 11 Gew.-% Natriumhypochlorit beinhaltet.

## Revendications

1. Un produit de nettoyage liquide pour tuyaux d'écoulement comprenant une composition aqueuse ayant un pH d'au moins 11 et comprenant : (a) de 2 à 15 % en poids d'un sel d'hypochlorite de métal, et (b) de 0,2 à 4 % en poids d'un acide polyacrylique ayant une masse moléculaire moyenne en poids d'au moins 40 000, où ledit acide polyacrylique ne comprend pas plus de 0,3 % en poids de résidus polymérisés d'agents de réticulation.

2. Le produit de nettoyage liquide pour tuyaux d'écoulement de la revendication 1 dans lequel la composition aqueuse a un pH d'au moins 12.

3. Le produit de nettoyage liquide pour tuyaux d'écoulement de la revendication 2 dans lequel l'acide polyacrylique a une masse moléculaire moyenne en poids d'au moins 100 000.

4. Le produit de nettoyage liquide pour tuyaux d'écoulement de la revendication 3 comprenant de 0,5 à 2 % en poids de l'acide polyacrylique.

5. Le produit de nettoyage liquide pour tuyaux d'écoulement de la revendication 4 dans lequel le sel d'hypochlorite de métal est l'hypochlorite de sodium.

6. Le produit de nettoyage liquide pour tuyaux d'écoulement de la revendication 5 comprenant de 4 à 11 % en poids d'hypochlorite de sodium.

7. Un procédé pour inhiber la corrosion dans une composition aqueuse ayant un pH d'au moins 11 et de 2 à 15 % en poids d'un sel d'hypochlorite de métal en ajoutant de 0,2 à 4 % en poids d'un acide polyacrylique ayant une masse moléculaire moyenne en nombre d'au moins 40 000, où ledit acide polyacrylique ne comprend pas plus de 0,3 % en poids de résidus polymérisés d'agents de réticulation, dans lequel la composition aqueuse est un produit de nettoyage liquide pour tuyaux d'écoulement.

8. Le procédé de la revendication 7 dans lequel le produit de nettoyage pour tuyaux d'écoulement a un pH d'au moins 12.

9. Le procédé de la revendication 8 dans lequel l'acide polyacrylique a une masse moléculaire moyenne en poids d'au moins 100 000, la composition aqueuse comprend de 0,5 à 2 % en poids de l'acide polyacrylique et la composition aqueuse comprend de 4 à 11 % en poids d'hypochlorite de sodium.
